# EUROPÄISCHE PATENTSCHRIFT

(11) **EP 1 022 110 B1**
(45) Veröffentlichungstag und Bekanntmachung des Hinweises auf die Patenterteilung: **04.09.2002**
(21) Anmeldenummer: 00100218.7
(22) Anmeldetag: 14.01.2000
(51) Int. Cl.: B29C 45/40, B29C 45/76, B29C 45/80

(54) **Verfahren zur Entformung einer Gussform oder Pressform**
Demoulding process
Procédé de démoulage

(30) Priorität: 22.01.1999 DE 19902429
(43) Veröffentlichungstag der Anmeldung: 26.07.2000
(73) Patentinhaber: Siemens Aktiengesellschaft, 80333 München (DE)
(72) Erfinder: Keller, Dieter, 63743 Aschaffenburg (DE)

(56) Entgegenhaltungen:
- EP-A- 0 135 959
- PATENT ABSTRACTS OF JAPAN vol. 014, no. 140 (M-0950), 16. März 1990 (1990-03-16) -& JP 02 006114 A (DAIKIN IND LTD), 10. Januar 1990 (1990-01-10) -& DATABASE WPI Week 199008 Derwent Publications Ltd., London, GB; AN 1990-054008 XP002161959
- PATENT ABSTRACTS OF JAPAN vol. 1995, no. 04, 31. Mai 1995 (1995-05-31) -& JP 07 016898 A (SUMITOMO JUKIKAI PLAST MACH KK;OTHERS: 01), 20. Januar 1995 (1995-01-20)

## Beschreibung

Die Erfindung betrifft ein Verfahren zur Entformung einer Gußform oder Preßform, insbesondere einer Spritzprägeform für Kunststoff, bei der mehrere eine Negativform des zu fertigenden Formteils aufweisende Formwerkzeugteile von zumindest zwei in Abhängigkeit voneinander anzusteuernden Antrieben bewegt werden.

Solche Verfahren mit mehreren Antrieben werden benötigt, wenn komplizierte Formteile hergestellt werden, und sind aus der Praxis bekannt. Bei dem bekannten Verfahren werden zur Bewegung der Formwerkzeugteile eingesetzte Hydraulikzylinder untereinander mechanisch gekoppelt. Damit stehen die Bewegungen der Formwerkzeugteile in einer vorgesehenen Beziehung zueinander, so daß beispielsweise eines der Formwerkzeugteile um einen bestimmten Winkel gedreht wird, während das andere um einen vorgesehenen Weg linear verschoben wird.

Nachteilig bei dem bekannten Verfahren ist, daß es sehr aufwendig durchzuführen ist, da die mechanische Kopplung der Bewegungen der Antriebe einen sehr hohen baulichen Aufwand erfordert. Trotz dieses Aufwandes kann es zu Beschädigungen des Formteiles kommen, indem Teile des Formteils brechen. Ungleich gefährlicher ist jedoch der Fall, bei dem das Formteil anbricht. Derartige Schädigungen sind nicht sofort erkennbar und führen dazu, daß das Formteil erst zu einem späteren Zeitpunkt als Bestandteil einer Baugruppe während des Betriebs der Baugruppe bricht, so daß die gesamte Baugruppe ausfällt.

Für die Fertigung unterschiedlicher Formteile ist jeweils ein neuer baulicher Aufwand für die Kopplung der Bewegungen der Antriebe notwendig. Weiterhin läßt sich eine Schwindung des Formteils mit dem bekannten Verfahren nur ungenau berücksichtigen. Dies führt häufig zu einer Beschädigung des Formteils bei dessen Entformung.

Der Erfindung liegt das Problem zugrunde, ein Verfahren der eingangs genannten Art so zu gestalten, daß es möglichst einfach auf nahezu beliebige Formteile angepaßt werden kann und eine Beschädigung des Formteils bei der Entformung zuverlässig vermeidet.

Dieses Problem wird erfindungsgemäß dadurch gelöst, daß eine Steuereinrichtung zur Bewegung der Formwerkzeugteile die Position der Formwerkzeugteile ermittelt und mit elektronisch gespeicherten Bewegungskurven und/oder Bewegungsabläufen vergleicht und in Abhängigkeit des Vergleichs die Antriebe ansteuert.

Durch diese Gestaltung werden die Bewegungen der Formwerkzeugteile von der Steuereinrichtung entsprechend der Bewegungskurven bestimmt. Deshalb ist eine mechanische Kopplung der Antriebe nicht erforderlich. Für ein neues zu fertigendes Formteil ist daher abgesehen von der neuen Berechnung kein weiterer Aufwand notwendig. Die Schwindung des Formteils bei seinem Abkühlen in der Form läßt sich beispielsweise anhand von Erfahrungswerten bestimmen. Anschließend können die Werte der Bewegungskurven mit den Erfahrungswerten abgeglichen werden. Die Gefahr einer Beschädigung des Formteils bei dessen Entformung wird dank der Erfindung besonders gering gehalten. Hierdurch gestaltet sich die Durchführung des erfindungsgemäßen Verfahrens sehr einfach. Der bauliche Aufwand zur Durchführung des Verfahrens ist durch den Einsatz der Steuereinrichtung besonders gering. Dank der Erfindung lassen sich mit einer Vielzahl von Hinterschnitten versehene, im Spritzprägeverfahren erzeugte Schaufelräder von Seitenkanalpumpen ohne Beschädigung von Leitschaufeln aus der Form entfernen.

Das erfindungsgemäße Verfahren läßt sich besonders kostengünstig anwenden, wenn die Bewegungskurven und/oder die Bewegungsabläufe aus einem elektronischen Speicher entnommen werden.

Das erfindungsgemäße Verfahren läßt sich auf nahezu beliebig gestaltete Formteile anwenden, wenn die Bewegungskurven und/oder die Bewegungsabläufe entsprechend dem herzustellenden Formteil von einem Simulationsrechner berechnet werden. Hierdurch läßt sich zudem ein zur Durchführung des erfindungsgemäßen Verfahrens vorgesehenes Formwerkzeug nach einem Auswechseln der Formwerkzeugteile einfach umprogrammieren.

Die Formwerkzeugteile lassen sich gemäß einer vorteilhaften Weiterbildung der Erfindung besonders exakt bewegen, wenn die Steuereinrichtung mit den Formwerkzeugteilen verbundenen Elektromotoren steuert. Hierdurch wird die beispielsweise durch Leckage hervorgerufene Ungenauigkeit der Bewegung der Formwerkzeugteile durch eine Hydraulikanlage vermieden.

Zur weiteren Erhöhung der Genauigkeit der Bewegung der Formwerkzeugteile mit den vorgesehenen Bahnkurven trägt es gemäß einer anderen vorteilhaften Weiterbildung der Erfindung bei, wenn die Steuereinrichtung den Elektromotoren eine Abfolge von Schrittimpulsen zur schrittweisen Bewegung der Formwerkzeugteile zuleitet.

Der bauliche Aufwand für die Steuereinrichtung und den Speicher läßt sich gemäß einer anderen vorteilhaften Weiterbildung der Erfindung besonders gering halten, wenn die Bewegung der Formwerkzeugteile in Schritten gemessen wird und wenn die Steuereinrichtung die Bewegungskurven in von den Elektromotoren abzufahrende Punkte umrechnet. Hierdurch lassen sich die Bewegungen der Formwerkzeugteile und die zeitliche Abfolge der Bewegungen sehr einfach festlegen.

Die Gefahr einer Zerstörung des zu fertigenden Formteils läßt sich gemäß einer anderen vorteilhaften Weiterbildung der Erfindung besonders gering halten, wenn die Steuereinrichtung eine unerwünschte Berührung der Formwerkzeugteile mit dem Formteil erfaßt und zumindest den die Berührung hervorgerufenen Antrieb abschaltet. Die Erfassung der unerwünschten Berührung des Formteils kann beispielsweise durch eine regelmäßige Überwachung der Stromaufnahme der Elektromotoren erfolgen. Alternativ dazu können in den Antrieben Sensoren angeordnet sein, die den Kraftaufwand für die Bewegung der Formwerkzeugteile ermitteln.

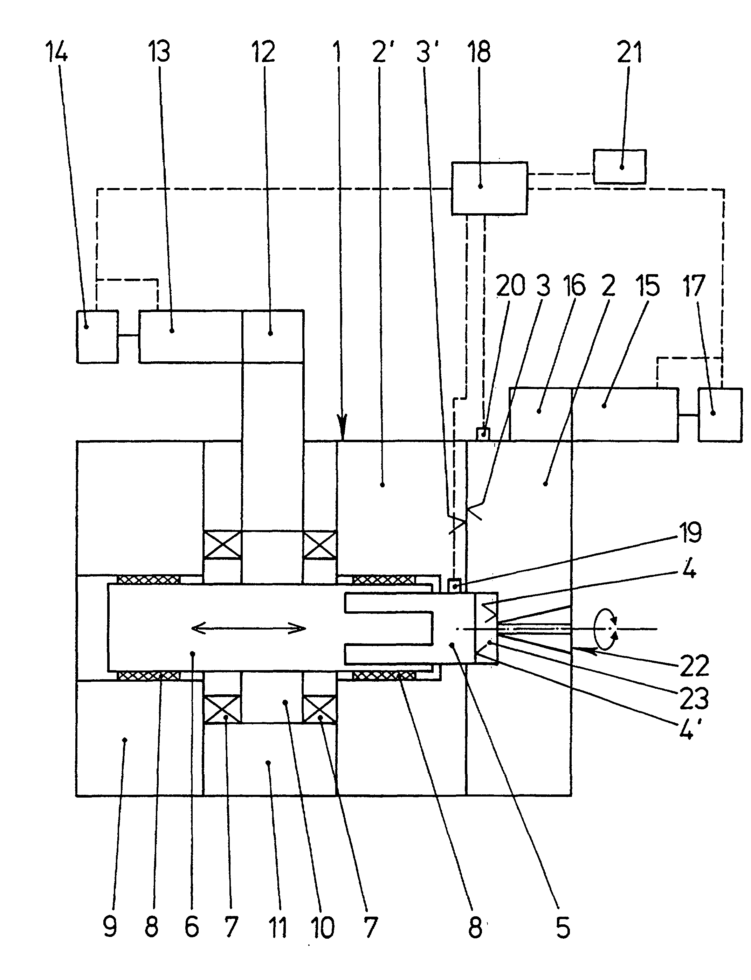

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in einer einzigen Figur eine Vorrichtung zum Spritzprägen eines Formteils aus Kunststoff.

Die Vorrichtung zum Spritzprägen hat ein Formwerkzeug 1 mit zwei Platten 2, 2'. An sich gegenüberliegenden Stirnseiten der Platten 3, 3' ist in einer der Platten 2 eine Negativform 4 des herzustellenden Formteils eingearbeitet. Die Platte 2 hat eine Düse 22 zum Einbringen von verflüssigtem Kunststoff in einen für das herzustellende Formteil vorgesehenen Hohlraum 23. In der anderen Platte 2' ist ein Formeinsatz 5 angeordnet, in dem auf seiner der gegenüberliegenden Platte 2 zugewandten Seite eine zweite Negativform 4' eingearbeitet ist. Der Formeinsatz 5 und die dem Formeinsatz 5 gegenüberstehende Platte 2 sind damit jeweils als Formwerkzeugteile ausgebildet und begrenzen mit ihren Negativformen 4, 4' den Hohlraum 23 für das herzustellende Formteil. Zum Ausgleich einer Schwindung des Materials ist der Hohlraum 23 etwas größer als das herzustellende Formteil.

Das Formteil kann hierbei beispielsweise ein Schaufelrad für eine als Seitenkanal ausgebildete Kraftstoffpumpe sein. Ein solches Schaufelrad zeichnet sich durch eine sehr geringe Größe von wenigen Zentimetern aus und hat zumindest an einer seiner Stirnseiten einen Kranz von Schaufelkammern. Die Schaufelkammern werden von schräg gegenüber den Stirnseiten angeordneten Leitschaufeln gebildet. Deshalb muß das Schaufelrad aus dem Formwerkzeug 1 durch ein Drehen und gleichzeitiges Ziehen entnommen werden.

Auf seiner der Negativform 4' abgewandten Seite ist der Formeinsatz 5 mit einer Gewindespindel 6 eines Gewindeschraubtriebs 7 verbunden. Die Gewindespindel 6 ist mittels Wälzführungen 8 an der Platte 2' und einer Platte 9 frei beweglich gelagert. Eine die Gewindespindel 6 antreibende Spindelmutter 10 ist drehbar in einer weiteren Platte 11 des Formwerkzeugs 1 angeordnet. Die Spindelmutter 10 wird über ein Getriebe 12 von einem Elektromotor 13 angetrieben, dessen Drehzahl, Drehrichtung und Stromaufnahme von einer Meßeinrichtung 14 erfaßt wird. Eine der Platten 2 läßt sich von einem Elektromotor 15 mit einem Getriebe 16 gegenüber der anderen Platte 2' verdrehen. Der Elektromotor 15 ist ebenfalls mit einer Meßeinrichtung 17 zur Erfassung seiner Drehzahl, Drehrichtung und Stromaufnahme verbunden. Die Meßeinrichtungen 14, 17 und die Elektromotoren 13, 15 sind mit einer gemeinsamen Steuereinrichtung 18 verbunden. Die Bewegungen der als Formwerkzeugteil ausgebildeten Platte 2 und des Formeinsatzes 5 werden jeweils von Sensoren 19, 20 erfaßt und der Steuereinrichtung 18 zugeleitet. Weiterhin hat die Steuereinrichtung 18 eine Verbindung mit einem Speicher 21.

Die Steuereinrichtung 18 vergleicht die Werte der Meßeinrichtungen 14, 17 und der Sensoren 19, 20 mit in dem Speicher 21 abgelegten Werten. Die in dem Speicher 21 abgelegten Werte entsprechen berechneten Sollwerten von Bewegungskurven und Bewegungsabläufen, in denen sich die als Formwerkzeugteil ausgebildete Platte 2 und der Formeinsatz 5 bewegen sollen. Alternativ dazu können die Werte auch von einem Simulationsrechner erzeugt werden. Bei dem zur Herstellung von Schaufelrädern für eine als Seitenkanal ausgebildete Kraftstoffpumpe erfassen die Sensoren 19, 20 die Bewegungen der Formwerkzeugteile vorzugsweise in 0,001 bis 0,01 mm Schritten. Bei einem Abweichen der Werte der Sensoren 19, 20 und der Sollwerte korrigiert die Steuereinrichtung 18 durch entsprechende Signale an die Elektromotoren 13, 15. Nachdem die als Formwerkzeugteil ausgebildete Platte 2 aus dem Formteil herausgedreht ist, lassen sich die Platten 2, 2' auseinanderziehen. Das erzeugte Formteil läßt sich anschließend einfach von Hand von dem Formeinsatz 5 entnehmen. Wenn während der Entformung eine der Meßeinrichtungen 14, 17 einen sprunghaften Anstieg der Stromaufnahme der Elektromotoren 13, 15 erfaßt, schaltet die Steuereinrichtung 18 die Elektromotoren 13, 15 ab. Hierdurch wird eine Beschädigung des hergestellten Formteils verhindert.

## Patentansprüche

1. Verfahren zur Entformung einer Gußform oder Preßform, insbesondere einer Spritzprägeform für Kunststoff, bei der mehrere eine Negativform des zu fertigenden Formteils aufweisende Formwerkzeugteile von zumindest zwei in Abhängigkeit voneinander anzusteuernden Antrieben bewegt werden, **dadurch gekennzeichnet, daß** eine Steuereinrichtung zur Bewegung der Formwerkzeugteile die Position der Formwerkzeugteile ermittelt und mit elektronisch gespeicherten Bewegungskurven und/oder Bewegungsabläufen vergleicht und in Abhängigkeit des Vergleichs die Antriebe ansteuert.

2. Verfahren nach Anspruch 1, **dadurch gekennzeichnet, daß** die Bewegungskurven und/oder die Bewegungsabläufe aus einem elektronischen Speicher entnommen werden.

3. Verfahren nach Anspruch 1 oder 2, **dadurch gekennzeichnet, daß** die Bewegungskurven und/oder die Bewegungsabläufe entsprechend dem herzustellenden Formteil von einem Simulationsrechner berechnet werden.

4. Verfahren nach zumindest einem der vorhergehenden Ansprüche, **dadurch gekennzeichnet, daß** die Steuereinrichtung mit den Formwerkzeugteilen verbundene Elektromotoren steuert.

5. Verfahren nach zumindest einem der vorhergehenden Ansprüche, **dadurch gekennzeichnet, daß** die Steuereinrichtung den Elektromotoren eine Abfolge von Schrittimpulsen zur schrittweisen Bewegung der Formwerkzeugteile zuleitet.

6. Verfahren nach zumindest einem der vorhergehenden Ansprüche, **dadurch gekennzeichnet, daß** die Bewegung der Formwerkzeugteile in Schritten gemessen wird und daß die Steuereinrichtung die Bewegungskurven in von den Elektromotoren abzufahrende Punkte umrechnet.

7. Verfahren nach zumindest einem der vorhergehenden Ansprüche, **dadurch gekennzeichnet, daß**,die Steuereinrichtung eine unerwünschte Berührung der Formwerkzeugteile mit dem Formteil erfaßt und zumindest den die Berührung hervorgerufenen Antrieb abschaltet.

## Claims

1. Extraction method for a casting mould or press mould, in particular an injection stamping mould for plastic, in which a plurality of mould parts having a negative mould of the moulded part to be manufactured are moved by at least two drives, which can be activated in dependence on one another, **characterized in that** a control device for moving the mould parts determines the position of the mould parts and compares it with electronically stored motion curves and/or motion sequences and activates the drives as a function of the comparison.

2. Method according to Claim 1, **characterized in that** the motion curves and/or the motion sequences are taken from an electronic memory.

3. Method according to Claim 1 or 2, **characterized in that** the motion curves and/or the motion sequences are calculated by a simulation computer to correspond with the moulded part to be manufactured.

4. Method according to at least one of the preceding claims, **characterized in that** the control device controls electric motors connected to the mould parts.

5. Method according to at least one of the preceding claims, **characterized in that** the control device supplies a series of step pulses to the electric motors for the stepwise motion of the mould parts.

6. Method according to at least one of the preceding claims, **characterized in that** the motion of the mould parts is measured in steps and **in that** the control device converts the motion curves into target points for the electric motors.

7. Method according to one of the preceding claims, **characterized in that** the control device records an unintended contact between the mould parts and the moulded part and switches off at least the drive causing the contact.

## Revendications

1. Procédé de démoulage d'un moule de coulée ou d'une matrice de compression, en particulier d'un moule de façonnage par injection pour de la matière synthétique, pour lequel plusieurs parties d'outil de formage, présentant une forme négative de la pièce de forme à fabriquer, sont déplacées par au moins deux dispositifs d'entraînement commandés en fonction l'un de l'autre, **caractérisé en ce qu'**un dispositif de commande devant assurer le déplacement des parties d'outil de formage détermine la position des parties d'outil de formage et la compare à des courbes de déplacement et/ou de déroulement cinématique, mémorisées par voie électronique, et commande les dispositifs d'entraînement en fonction de la comparaison effectuée.

2. Procédé selon la revendication 1, **caractérisé en ce que** les courbes cinématiques et/ou les déroulements cinématiques sont prélevé(e)s d'une mémoire électronique.

3. Procédé selon la revendication 1 ou 2, **caractérisé en ce que** les courbes cinématiques et/ou les déroulements cinématiques sont calculé(e)s par un ordinateur de simulation, de manière correspondante à la pièce de forme à fabriquer.

4. Procédé selon au moins l'une des revendications précédentes, **caractérisé en ce que** le dispositif de commande commande des moteurs électriques reliés aux parties d'outil de formage.

5. Procédé selon au moins l'une des revendications précédentes, **caractérisé en ce que** le dispositif de commande amène aux moteurs électriques une succession d'impulsions correspondant à des pas, afin de déplacer pas à pas les parties d'outil de formage.

6. Procédé selon au moins l'une des revendications précédentes, **caractérisé en ce que** le déplacement des parties de pièce de forme est mesuré par pas et **en ce que** le dispositif de commande convertit par calcul les courbes cinématiques, en des points devant être franchis par les moteurs électriques.

7. Procédé selon au moins l'une des revendications précédentes, **caractérisé en ce que** le dispositif de commande appréhende un contact indésirable entre les parties d'outil de formage et la pièce de forme et met hors service au moins l'entraînement ayant provoqué le contact.
